# EUROPÄISCHE PATENTSCHRIFT

(11) **EP 3 063 808 B1**
(45) Veröffentlichungstag und Bekanntmachung des Hinweises auf die Patenterteilung: **26.06.2019**
(21) Anmeldenummer: 14789837.3
(22) Anmeldetag: 27.10.2014
(51) Int. Cl.: H01M 2/26, H01M 2/30, H01M 2/22, H01M 10/0525, H01M 2/20

(54) **ELEKTROCHEMISCHER AKKUMULATOR**
ELECTROCHEMICAL ACCUMULATOR
ACCUMULATEUR ÉLECTROCHIMIQUE

(30) Priorität: 01.11.2013 DE 102013112060
(43) Veröffentlichungstag der Anmeldung: 07.09.2016
(73) Patentinhaber: Johnson Controls Advanced Power Solutions GmbH, 30419 Hannover (DE)
(72) Erfinder: JOSWIG, Ralf, 29690 Buchholz (Aller) (DE); BRENNER, Helge, 30453 Hannover (DE); EHRLICH, Bernhard, 31535 Neustadt a. Rbge. (DE)
(74) Vertreter: Trinks, Ole
(86) Internationale Anmeldenummer: PCT/EP2014/073022
(87) Internationale Veröffentlichungsnummer: WO 2015/063037

(56) Entgegenhaltungen:
- EP-A2- 1 160 893
- WO-A1-2011/113633
- WO-A1-2013/176914
- DE-U1-202011 106 222

## Beschreibung

Die Erfindung betrifft einen elektrochemischen Akkumulator gemäß dem Oberbegriff des Anspruchs 1. Die Erfindung betrifft außerdem ein Verfahren zur Herstellung eines elektrochemischen Akkumulators gemäß dem Oberbegriff des Anspruchs 12.

Derartige elektrochemische Akkumulatoren werden in vielen Bereichen der Technik eingesetzt. Die vorliegende Erfindung betrifft insbesondere den Bereich der Akkumulatoren für Elektro- und Hybridfahrzeuge. Bei solchen Akkumulatoren werden besondere Anforderungen an die Leistungsfähigkeit, das Gewicht und die Herstellkosten gestellt.

Dokument EP 1 160 893 A2 betrifft einen Lithium-Ionen-Akkumulator, der wenigstens ein Gehäuse und wenigstens eine in dem Gehäuse angeordnete elektrochemische Zelle sowie wenigstens zwei elektrische Anschlusspole zur elektrischen Kontaktierung des Akkumulators aufweist, wobei wenigstens einer der Anschlusspole aus wenigstens zwei miteinander verbundenen Abschnitten unterschiedlicher Metalle oder Metalllegierungen ausgebildet ist.

Der Erfindung liegt die Aufgabe zugrunde, elektrochemische Akkumulatoren für die Großserienfertigung rationeller zu gestalten, insbesondere für automatisierte Fertigungsprozesse in Anwendungen für die Automobiltechnik. Ferner soll ein verbessertes Herstellverfahren für solche Akkumulatoren angegeben werden.

Diese Aufgabe wird durch den Gegenstand des unabhängigen Patentanspruchs 1 und des nebengeordneten Patentanspruchs 9 gelöst. Vorteilhafte Weiterbildungen sind in den abhängigen Ansprüchen angegeben.

Genauer gesagt, es wird diese Aufgabe gemäß Anspruch 1 gelöst durch einen elektrochemischen Akkumulator, der wenigstens ein prismatisches Gehäuse und wenigstens eine in dem Gehäuse angeordnete elektrochemische Zelle sowie wenigstens zwei elektrische Anschlusspole zur elektrischen Kontaktierung des Akkumulators aufweist, bei dem wenigstens einer der Anschlusspole aus wenigstens zwei miteinander verbundenen Abschnitten unterschiedlicher Metalle oder Metalllegierungen ausgebildet ist, wobei die wenigstens zwei elektrischen Anschlusspole an einer ersten Gehäusewand des Gehäuses angeordnet sind.

Der wenigstens eine Anschlusspol kann z. B. aus zwei separaten, einzeln gefertigten Metallstücken zusammengesetzt werden, die die zwei Abschnitte unterschiedlicher Metalle oder Metalllegierungen des Anschlusspols bilden. Durch einen solchen Anschlusspol, der auch als Bimetall- oder Multimetall-Anschlusspol bezeichnet werden kann, können eine Reihe von besonderen Anforderungen hinsichtlich der Herstellung einzelner Akkumulatoren und von Akkumulatoranordnungen mit einer Vielzahl von Einzel-Akkumulatoren besser erfüllt werden. Eine Vielzahl von Problemen in der Praxis hängt mit den chemischen Eigenschaften der zur Bildung der elektrochemischen Zelle verwendeten Chemikalien zusammen. Um Korrosionseffekte zu vermeiden, ist die Materialauswahl für die Herstellung von Anschlusspolen bereits auf bestimmte Materialien je nach Zellentechnologietyp beschränkt. Zur Verbindung mehrerer Akkumulatoren, z. B. in Reihenschaltung, werden diese bisher z. B. über schraubbare Stromschienen bzw. Busbars miteinander verbunden. Zur Verbesserung der Herstellungsprozesse wäre eine Schweiß- oder Lötverbindung in vielen Fällen günstiger. Dies ist aber wiederum wegen der beschränkten Materialauswahl für die Anschlusspole in manchen Fällen nicht möglich oder mit erhöhten Herstellkosten verbunden. Durch den erfindungsgemäßen Vorschlag, wenigstens einen der Anschlusspole aus wenigstens zwei miteinander verbundenen Abschnitten unterschiedlicher Metalle oder Metalllegierungen auszubilden, kann sozusagen eine Transformation des für die Kontaktierung der elektrochemischen Zelle am besten geeigneten Materials auf ein für die äußere elektrische Verbindung des Anschlusspols mit Anschlusspolen anderer Akkumulatoren am besten geeigneten Material durchgeführt werden.

Der wenigstens eine Anschlusspol, der die wenigstens zwei miteinander verbundenen Abschnitte unterschiedlicher Metalle oder Metalllegierungen aufweist, kann als schraubbarer Anschlusspol oder als Anschlusspol ohne schraubbare Anschlussmöglichkeit ausgebildet sein. Im erstgenannten Fall kann der Anschlusspol z. B. über eine Verschraubung über eine Stromschiene oder einen Busbar mit einem Anschlusspol eines weiteren elektrochemischen Akkumulators verbunden werden. Im letztgenannten Fall kann diese Verbindung z. B. über ein Anlöten oder Anschweißen einer Stromschiene bzw. eines Busbars erfolgen.

Gemäß der Erfindung ist nur ein erster der wenigstens zwei Abschnitte des Anschlusspols in direktem mechanischen und elektrischen Kontakt mit dem positiven oder negativen Anschluss der in dem Gehäuse angeordneten wenigstens einen Zelle verbunden. Ein anderer zweiter Abschnitt des Anschlusspols ist nur indirekt über den ersten Abschnitt mit diesem Anschluss der Zelle verbunden. Damit können unerwünschte chemische bzw. elektrochemische Prozesse, die andernfalls aufgrund unterschiedlicher Materialien des ersten Abschnitts des Anschlusspols und des Anschlusses der Zelle auftreten können, unterbunden werden. Der erste Abschnitt kann z. B. aus dem gleichen Material gebildet sein wie das Material des Anschlusses der Zelle, mit dem der erste Abschnitt in direktem mechanischen und elektrischen Kontakt steht.

Gemäß einer vorteilhaften Weiterbildung der Erfindung weist ein Abschnitt des Anschlusspols Kupfer auf oder besteht aus Kupfer. Ein anderer Abschnitt des Anschlusspols weist Aluminium auf oder besteht aus Aluminium. Insbesondere kann der zuvor erwähnte erste Abschnitt des Anschlusspols, der in direktem mechanischen und elektrischen Kontakt mit dem positiven oder negativen Anschluss der Zelle steht, Kupfer aufweisen oder aus Kupfer bestehen.

Gemäß der Erfindung weist der wenigstens eine Anschlusspol eine zur Gehäuseoberfläche, an der der Anschlusspol am Gehäuse des Akkumulators angeordnet ist, im Wesentlichen parallele Trennfläche zwischen den zwei miteinander verbundenen Abschnitten unterschiedlicher Metalle oder Metalllegierungen auf. Hierdurch kann einerseits eine ausreichende Beabstandung des zweiten Abschnitts des Anschlusspols, der nur indirekt über den ersten Abschnitt mit dem Anschluss der Zelle verbunden ist, von diesem Anschluss der Zelle gewährleistet werden. Die Trennfläche kann eine ebene oder unebene Fläche sein. Insbesondere kann die Trennfläche als Trennebene ausgebildet sein. So begünstigt eine im Wesentlichen parallele Trennebene die Herstellbarkeit des mehrmetalligen Anschlusspols sowie damit des gesamten elektrochemischen Ackumulators. Insbesondere können die zwei Abschnitte unterschiedlicher Metalle oder Metalllegierungen des Anschlusspols erst zu einem Zeitpunkt im Laufe des Herstellprozesses, wenn bereits der erste Abschnitt mit dem Anschluss der Zelle verbunden ist, miteinander verbunden werden, z. B. durch Rotationsschweißen.

Gemäß der Erfindung ragt der wenigstens eine Anschlusspol durch eine Gehäusewand des Akkumulators hindurch. Die Verbindungsstelle der wenigstens zwei miteinander verbundenen Abschnitte unterschiedlicher Metalle oder Metalllegierungen befindet sich dabei innerhalb des Gehäuses oder zumindest innerhalb eines gegenüber der äußeren Umgebung des Gehäuses abgedichteten Bereichs. Dies hat den Vorteil, dass die Verbindungsstelle zwischen den zwei miteinander verbundenen Abschnitten durch das Gehäuse vor äußeren Umgebungseinflüssen, insbesondere Feuchtigkeit, geschützt wird.

Gemäß einer vorteilhaften Weiterbildung der Erfindung ist der wenigstens eine Anschlusspol, insbesondere der Anschlusspol aus wenigstens zwei miteinander verbundenen Abschnitten unterschiedlicher Metalle oder Metalllegierungen, ein negativer Anschlusspol des Akkumulators. Hierdurch können bei bestimmten Ackumulatorzellen-Technologien, z. B. bei Lithium-Zellen, besondere unerwünschte Effekte im Bereich des negativen Anschlusspols unterbunden werden.

Gemäß einer vorteilhaften Weiterbildung der Erfindung ist wenigstens ein zweiter Anschlusspol des Akkumulators aus dem Gehäusematerial des Akkumulators gebildet. Der zweite Anschlusspol sowie das Gehäuse können z. B. aus Aluminium gebildet sein oder Aluminium aufweisen. Dies erlaubt eine weiter vereinfachte und kostengünstigere Fertigung solcher Akkumulatoren. Insbesondere kann vorgesehen sein, dass der zweite Anschlusspol in eine Gehäusewand des Akkumulators eingeprägt ist. Der zweite Anschlusspol ist dabei derart eingeprägt, dass er von der Außenkontur des Gehäuses hervorragt, z. B. in rotationssymmetrischer, zylindrischer, kegelstumpfförmiger oder prismatischer Form. Dies erlaubt eine besonders kostengünstige Bereitstellung des zweiten Anschlusspols. Insbesondere ist kein gesondertes Bauteil hierfür erforderlich und am Akkumulator zu befestigen.

Das Gehäuse des Akkumulators weist eine prismatische Form auf, z. B. eine im Wesentlichen quaderförmige Form, ggf. mit abgerundeten Kanten und/oder Ecken.

Gemäß einer vorteilhaften Weiterbildung der Erfindung ist die wenigstens eine Zelle im Gehäuse des Akkumulators eine Lithium-Ionen-Zelle. Dies begünstigt die Bereitstellung von Akkumulatoren für Elektro- und Hybridfahrzeuge mit hoher Speicherkapazität auf geringem Raum.

Gemäß der Erfindung ist wenigstens einer der Anschlusspole aus wenigstens zwei miteinander verbundenen Abschnitten unterschiedliche Metalle oder Metalllegierungen rotationssymmetrisch ausgebildet.

Die eingangs genannte Aufgabe wird außerdem gemäß Anspruch 12 gelöst durch ein Verfahren zur Herstellung eines elektrochemischen Akkumulators, der wenigstens ein Gehäuse und wenigstens eine in dem Gehäuse angeordnete elektrochemische Zelle sowie wenigstens zwei elektrische Anschlusspole zur elektrischen Kontaktierung des Akkumulators aufweist, wobei wenigstens einer der Anschlusspole aus wenigstens zwei Abschnitten unterschiedlicher Metalle oder Metalllegierungen gebildet wird und diese Abschnitte miteinander verbunden werden. Gemäß einer vorteilhaften Weiterbildung der Erfindung können die wenigstens zwei Abschnitte unterschiedlicher Metalle oder Metalllegierungen durch ein Reibschweißverfahren, z.B. Rotationsschweißen, miteinander verbunden werden. Dies begünstigt eine einfache und kostengünstige Herstellung des wenigstens zweimetalligen Anschlusspols. Insbesondere kann der Anschlusspol aus zwei oder mehr Abschnitten vorgefertigt werden und anschließend in dem Akkumulator verbaut werden.

Das Rotationsschweißen kann insbesondere in der Art durchgeführt werden, dass die wenigstens zwei Abschnitte des Anschlusspols, bevor sie verbunden sind, in einer Rotationsbewegung relativ zueinander bewegt werden und dabei gegeneinander gedrückt werden. Hierbei wird Wärme erzeugt, die schließlich zu einem Verschweißen der zwei Abschnitte miteinander führt. Das Rotationsschweißen ist damit eine besondere Ausführungsform des Reibschweißens. Bei der Rotationsbewegung kann entweder ein Abschnitt des Anschlusspols festgehalten sein und der andere Abschnitt bewegt werden, oder beide Abschnitte werden gegeneinander bewegt. Die Rotationsbewegung kann eine kontinuierliche Rotationsbewegung in derselben Drehrichtung sein, oder eine Rotationsbewegung mit wechselnder Drehrichtung.

Die Erfindung wird nachfolgend anhand von Ausführungsbeispielen unter Verwendung von Zeichnungen näher erläutert.

Es zeigen:
- Figur 1: einen elektrochemischen Akkumulator in isometrischer Ansicht und
- Figur 2: einen Teil des elektrochemischen Akkumulators gemäß Figur 1 in Schnittdarstellung und
- Figur 3: eine weitere Ausführungsform eines elektrochemischen Akkumulators in isometrischer Darstellung.

In den Figuren werden gleiche Bezugszeichen für einander entsprechende Elemente verwendet.

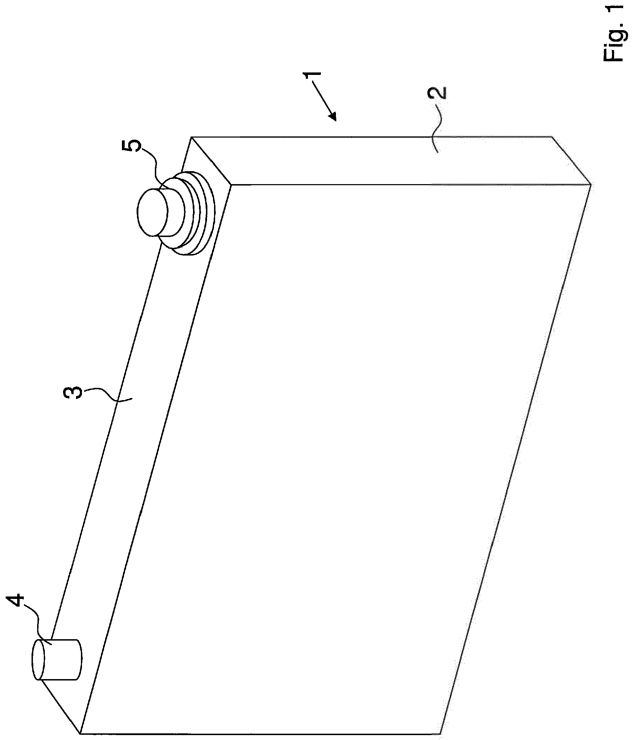

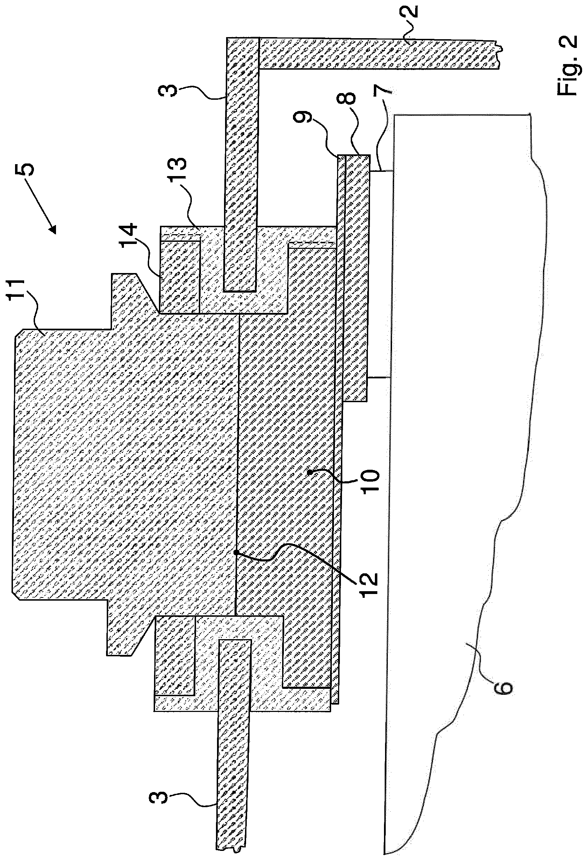

Die Figur 1 zeigt einen elektrochemischen Akkumulator 1, der ein prismatisches, d. h. im Wesentlichen quaderförmiges Gehäuse 2 aufweist. An einer Gehäusewand 3 des Gehäuses 2 treten zwei elektrische Anschlusspole 4, 5 aus dem Gehäuse 2 des Akkumulators 1 aus. Die Anschlusspole 4, 5 sind mit einer oder mehreren im Inneren des Gehäuses angeordneten elektrochemischen Zellen elektrisch verbunden. Der Anschlusspol 4 kann zum Beispiel die in Figur 1 erkennbare zylindrische Form aufweisen. Der andere Anschlusspol 5 weist eine komplexere Form auf, die nachfolgend anhand der Schnittdarstellung der Figur 2 erläutert wird.

Der Anschlusspol 5 ist als Anschlusspol mit wenigstens zwei miteinander verbundenen Abschnitten unterschiedlicher Metalle oder Metalllegierungen ausgebildet. Dies ist in der Figur 2 anhand eines oberen Abschnitts 11 des Anschlusspols und eines darunter angeordneten unteren Abschnitts 10 des Anschlusspols dargestellt.

Zwischen den Abschnitten 10, 11 ist eine Trennebene 12 erkennbar, die im Wesentlichen parallel zur Gehäusewand 3 bzw. der entsprechenden Außenoberfläche der Gehäusewand 3 verläuft. Der obere Abschnitt 11 besteht z. B. aus Aluminium, der untere Abschnitt 10 aus Kupfer. Der untere Abschnitt 10 ist über Metallstreifen 8, 9, z. B. Kupferstreifen, mit einem elektrischen Anschluss 7 einer in dem Gehäuse 2 angeordneten Lithium-Ionen-Zelle 6 verbunden.

Die Bauteile 8, 9, 10 sind insbesondere aus demselben Metallmaterial gebildet. Sie können z. B. durch Verschweißen miteinander verbunden sein. Der obere Abschnitt 11 des Anschlusspols 5 kann durch Rotationsschweißen auf den unteren Abschnitt 10 aufgeschweißt sein.

Das Gehäuse 2 kann insbesondere aus einem metallischen, d. h. elektrisch leitfähigen Material bestehen. Aus diesem Grund ist die Dichtung 13 aus einem elektrisch isolierenden Material, insbesondere einem Kunststoffmaterial, gebildet. Der Anschlusspol 5 ist über eine Dichtung 13 in der Gehäuseöffnung der Gehäusewand 3 eingesetzt und darüber gegenüber dem Gehäuse abgedichtet. Insbesondere wird durch die Dichtung 13 verhindert, dass äußere Umgebungseinflüsse Auswirkungen auf Bauteile im Inneren des Gehäuses 2 oder auf die Verbindungsstelle zwischen den Abschnitten 10, 11 des Anschlusspols 5 haben können. Der obere Abschnitt 11 des Anschlusspols 5 kann zusätzlich über eine Unterlegscheibe 14 in der Dichtung 13 gehalten sein, um die Dichtung 13 zu schonen und mechanisch zu stützen.

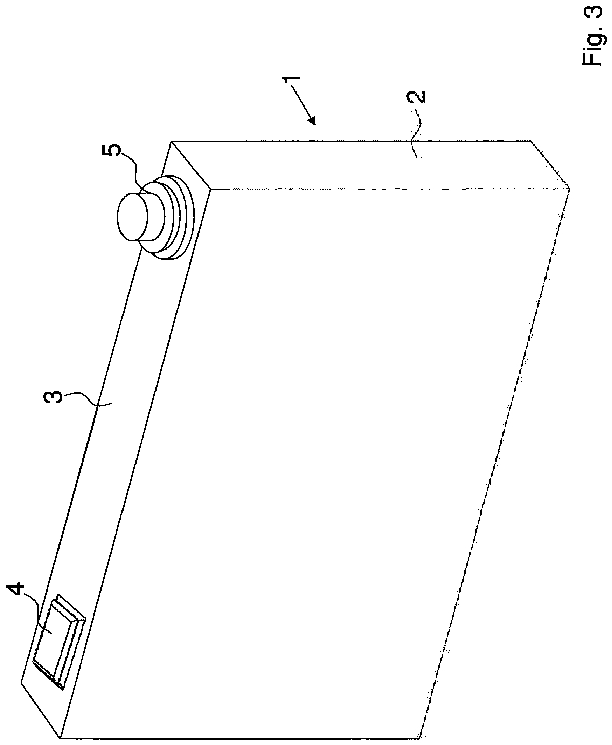

Die Figur 3 zeigt eine weitere Ausführungsform eines elektrochemischen Akkumulators, die sich durch eine andere Ausführungsform des Anschlusspols 4 von der Ausführungsform der Figur 1 unterscheidet. Erkennbar ist, dass der Anschlusspol 4 in Draufsicht eine rechteckförmige Kontur hat. Der Anschlusspol 4 kann aus dem Material des Gehäuses 2, z. B. aus Aluminium, hergestellt sein und direkt durch einen Prägeprozess in die Gehäusewand 3 eingeformt sein. Dadurch entfällt die Herstellung und Montage eines zweiten Anschlusspols 4 als gesondertes Bauteil.

## Patentansprüche

1. Elektrochemischer Akkumulator (1), der wenigstens ein prismatisches Gehäuse (2) und wenigstens eine in dem Gehäuse (2) angeordnete elektrochemische Zelle (6) sowie zwei elektrische Anschlusspole (4, 5) zur elektrischen Kontaktierung des Akkumulators (1) aufweist,
wobei wenigstens einer der Anschlusspole (4, 5) aus wenigstens zwei miteinander verbundenen Abschnitten (10, 11) unterschiedlicher Metalle oder Metalllegierungen rotationssymmetrisch ausgebildet ist,
wobei die zwei elektrischen Anschlusspole (4, 5) an einer ersten Gehäusewand (3) des Gehäuses (2) angeordnet sind,
wobei die wenigstens zwei Abschnitte (10, 11) einen oberen Abschnitt (11) und einen darunter angeordneten unteren Abschnitt (10) aufweisen, wobei der untere Abschnitt (10) mit einem positiven oder negativen elektrischen Anschluss (7) der elektrochemischen Zelle (6) mechanisch und elektrisch verbunden ist und der obere Abschnitt (11) nur indirekt über den unteren Abschnitt (10) mit dem Anschluss (7) der elektrochemischen Zelle (6) verbunden ist,
**dadurch gekennzeichnet, dass**
der wenigstens eine Anschlusspol (4, 5) durch die erste Gehäusewand (3) des Akkumulators (1) hindurchragt und sich die Verbindungsstelle der wenigstens zwei miteinander verbundenen Abschnitte (10, 11) unterschiedlicher Metalle oder Metalllegierungen innerhalb des Gehäuses (2) oder zumindest innerhalb eines gegenüber der äußeren Umgebung des Gehäuses abgedichteten Bereichs befindet, und
dass eine Trennebene (12) zwischen dem oberen Abschnitt (11) und dem unteren Abschnitt (10) angeordnet ist, die parallel zu der ersten Gehäusewand (3) verläuft.

2. Akkumulator nach Anspruch 1,
**dadurch gekennzeichnet, dass**
ein Abschnitt (10, 11) des Anschlusspols (4, 5) Kupfer aufweist oder aus Kupfer besteht und ein anderer Abschnitt (10, 11) des Anschlusspols (4, 5) Aluminium aufweist oder aus Aluminium besteht.

3. Akkumulator nach Anspruch 1 oder 2,
**dadurch gekennzeichnet, dass**
der wenigstens eine Anschlusspol (4, 5) gegenüber dem Gehäuse (2) abgedichtet ist.

4. Akkumulator nach einem der vorhergehenden Ansprüche,
**dadurch gekennzeichnet, dass**
der wenigstens eine Anschlusspol (4, 5) ein negativer Anschlusspol des Akkumulators (1) ist.

5. Akkumulator nach einem der vorhergehenden Ansprüche,
**dadurch gekennzeichnet, dass**
wenigstens ein zweiter Anschlusspol (4) des Akkumulators (1) aus dem Gehäusematerial des Akkumulators (1) gebildet ist.

6. Akkumulator nach Anspruch 5,
**dadurch gekennzeichnet, dass**
der zweite Anschlusspol (4) in eine Gehäusewand (3) des Akkumulators (1) derart eingeprägt ist, dass der Anschlusspol (4) von der Außenkontur des Gehäuses (2) hervorragt.

7. Akkumulator nach einem der vorhergehenden Ansprüche,
**dadurch gekennzeichnet, dass**
die wenigstens eine Zelle (6) im Gehäuse (2) des Akkumulators (1) eine Lithium-Ionen-Zelle ist.

8. Akkumulator nach einem der vorhergehenden Ansprüche,
**dadurch gekennzeichnet, dass**
alle Anschlusspole (4, 5) rotationssymmetrisch ausgebildet sind.

9. Verfahren zur Herstellung eines elektrochemischen Akkumulators (1), der wenigstens ein prismatisches Gehäuse (2) und wenigstens eine in dem Gehäuse (1) angeordnete elektrochemische Zelle (6) sowie zwei elektrische Anschlusspole (4, 5) zur elektrischen Kontaktierung des Akkumulators (1) aufweist, **dadurch gekennzeichnet, dass** wenigstens einer der Anschlusspole (4, 5) rotationssymmetrisch aus wenigstens zwei Abschnitten (10, 11) unterschiedlicher Metalle oder Metalllegierungen gebildet wird und diese Abschnitte (10, 11) miteinander verbunden werden,
wobei die wenigstens zwei elektrischen Anschlusspole (4, 5) an einer ersten Gehäusewand (3) des Gehäuses (2) angeordnet sind, wobei die wenigstens zwei Abschnitte (10, 11) einen oberen Abschnitt (11) und einen darunter angeordneten unteren Abschnitt (10) aufweisen, wobei der untere Abschnitt (10) mit einem positiven oder negativen elektrischen Anschluss (7) der elektrochemischen Zelle (6) mechanisch und elektrisch verbunden ist und der obere Abschnitt (11) nur indirekt über den unteren Abschnitt (10) mit dem Anschluss (7) der elektrochemischen Zelle (6) verbunden ist, wobei eine Trennebene (12) zwischen dem oberen Abschnitt (11) und dem unteren Abschnitt (10) angeordnet ist, die parallel zu der ersten Gehäusewand (3) verläuft,
wobei der wenigstens eine Anschlusspol (4, 5) durch die erste Gehäusewand (3) des Akkumulators (1) hindurchragt und sich die Verbindungsstelle der wenigstens zwei miteinander verbundenen Abschnitte (10, 11) unterschiedlicher Metalle oder Metalllegierungen innerhalb des Gehäuses (2) oder zumindest innerhalb eines gegenüber der äußeren Umgebung des Gehäuses abgedichteten Bereichs befindet.

10. Verfahren nach Anspruch 9,
**dadurch gekennzeichnet, dass**
die wenigstens zwei Abschnitte (10, 11) unterschiedlicher Metalle oder Metalllegierungen durch ein Reibschweißverfahren miteinander verbunden werden.

## Claims

1. Electrochemical storage battery (1), which comprises at least one prismatic housing (2) and at least one electrochemical cell (6) arranged in the housing (2) as well as two electrical connection terminals (4, 5) for electrically contacting the storage battery (1),
wherein at least one of the connection terminals (4, 5) is formed rotationally symmetrically by at least two interconnected portions (10, 11) of different metals or metal alloys,
wherein the two electrical connection terminals (4, 5) are arranged on a first housing wall (3) of the housing (2),
wherein the at least two portions (10, 11) comprise an upper portion (11) and a lower portion (10) arranged thereunder, wherein the lower portion (10) is mechanically and electrically connected to a positive or negative electrical terminal (7) of the electrochemical cell (6) and the upper portion (11) is only indirectly connected to the terminal (7) of the electrochemical cell (6) via the lower portion (10),
**characterized in that**
the at least one connection terminal (4, 5) protrudes through the first housing wall (3) of the storage battery (1) and the connecting point of the at least two interconnected portions (10, 11) of different metals or metal alloys is located within the housing (2) or at least within a region sealed off from the outer surroundings of the housing, and
**in that** a separating plane (12) which runs parallel to the first housing wall (3) is arranged between the upper portion (11) and the lower portion (10).

2. Storage battery according to Claim 1,
**characterized in that**
one portion (10, 11) of the connection terminal (4, 5) comprises copper or consists of copper and another portion (10, 11) of the connection terminal (4, 5) comprises aluminium or consists of aluminium.

3. Storage battery according to Claim 1 or 2,
**characterized in that**
the at least one connection terminal (4, 5) is sealed off from the housing (2).

4. Storage battery according to one of the preceding claims,
**characterized in that**
the at least one connection terminal (4, 5) is a negative connection terminal of the storage battery (1).

5. Storage battery according to one of the preceding claims,
**characterized in that**
at least one second connection terminal (4) of the storage battery (1) is formed from the housing material of the storage battery (1).

6. Storage battery according to Claim 5,
**characterized in that**
the second connection terminal (4) is stamped into a housing wall (3) of the storage battery (1) in such a way that the connection terminal (4) protrudes from the outer contour of the housing (2).

7. Storage battery according to one of the preceding claims,
**characterized in that**
the at least one cell (6) in the housing (2) of the storage battery (1) is a lithium-ion cell.

8. Storage battery according to one of the preceding claims,
**characterized in that**
all of the connection terminals (4, 5) are formed rotationally symmetrically.

9. Method for producing an electrochemical storage battery (1), which comprises at least one prismatic housing (2) and at least one electrochemical cell (6) arranged in the housing (1) as well as two electrical connection terminals (4, 5) for electrically contacting the storage battery (1), **characterized in that** at least one of the connection terminals (4, 5) is formed rotationally symmetrically by at least two portions (10, 11) of different metals or metal alloys and these portions (10, 11) are interconnected,
wherein the at least two electrical connection terminals (4, 5) are arranged on a first housing wall (3) of the housing (2), wherein the at least two portions (10, 11) comprise an upper portion (11) and a lower portion (10) arranged thereunder, wherein the lower portion (10) is mechanically and electrically connected to a positive or negative electrical terminal (7) of the electrochemical cell (6) and the upper portion (11) is only indirectly connected to the terminal (7) of the electrochemical cell (6) via the lower portion (10),
wherein a separating plane (12) which runs parallel to the first housing wall (3) is arranged between the upper portion (11) and the lower portion (10),
wherein the at least one connection terminal (4, 5) protrudes through the first housing wall (3) of the storage battery (1) and the connecting point of the at least two interconnected portions (10, 11) of different metals or metal alloys is located within the housing (2) or at least within a region sealed off from the outer surroundings of the housing.

10. Method according to Claim 9,
**characterized in that**
the at least two portions (10, 11) of different metals or metal alloys are interconnected by a friction welding process.

## Revendications

1. Accumulateur (1) électrochimique, lequel possède au moins un boîtier (2) prismatique et au moins une cellule électrochimique (6) disposée dans le boîtier (2) ainsi que deux pôles de raccordement (4, 5) électriques destinés à établir le contact électrique avec l'accumulateur (1),
au moins l'un des pôles de raccordement (4, 5) étant configuré en symétrie de rotation par au moins deux portions (10, 11) reliées l'une à l'autre constituées de métaux ou d'alliages métalliques différents,
les deux pôles de raccordement (4, 5) électriques étant disposés sur une première paroi de boîtier (3) du boîtier (2),
les au moins deux portions (10, 11) possédant une portion supérieure (11) et une portion inférieure (10) disposée au-dessous de celle-ci, la portion inférieure (10) étant reliée mécaniquement et électriquement à une borne électrique (7) positive ou négative de la cellule électrochimique (6) et la portion supérieure (11) n'étant reliée qu'indirectement à la borne (7) de la cellule électrochimique (6) par le biais de la portion inférieure (10),
**caractérisé en ce que**
l'au moins un pôle de raccordement (4, 5) fait saillie à travers la première paroi de boîtier (3) de l'accumulateur (1) et le point de liaison des au moins deux portions (10, 11) reliées l'une à l'autre constituées de métaux ou d'alliages métalliques différents se trouve à l'intérieur du boîtier (2) ou au moins à l'intérieur d'une zone rendue étanche par rapport à l'environnement extérieur du boîtier, et
**en ce qu'**un plan de séparation (12) est disposé entre la portion supérieure (11) et la portion inférieure (10), lequel s'étend parallèlement à la première paroi de boîtier (3).

2. Accumulateur selon la revendication 1,
**caractérisé en ce que**
'une portion (10, 11) du pôle de raccordement (4, 5) comporte du cuivre ou se compose de cuivre et une autre portion (10, 11) du pôle de raccordement (4, 5) comporte de l'aluminium ou se compose d'aluminium.

3. Accumulateur selon la revendication 1 ou 2,
**caractérisé en ce que**
l'au moins un pôle de raccordement (4, 5) est rendu étanche par rapport au boîtier (2).

4. Accumulateur selon l'une des revendications précédentes,
**caractérisé en ce que**
l'au moins un pôle de raccordement (4, 5) est une borne de raccordement négatif de l'accumulateur (1).

5. Accumulateur selon l'une des revendications précédentes,
**caractérisé en ce que**
'au moins un deuxième pôle de raccordement (4) de l'accumulateur (1) est constitué du matériau de boîtier de l'accumulateur (1).

6. Accumulateur selon la revendication 5,
**caractérisé en ce que**
le deuxième pôle de raccordement (4) est incrusté dans une paroi de boîtier (3) de l'accumulateur (1) de telle sorte que le pôle de raccordement (4) dépasse du contour extérieur du boîtier (2).

7. Accumulateur selon l'une des revendications précédentes,
**caractérisé en ce que**
l'au moins une cellule (6) dans le boîtier (2) de l'accumulateur (1) est une cellule aux ions de lithium.

8. Accumulateur selon l'une des revendications précédentes,
**caractérisé en ce que**
tous les pôles de raccordement (4, 5) sont configurés en symétrie de rotation.

9. Procédé de fabrication d'un accumulateur (1) électrochimique, lequel possède au moins un boîtier (2) prismatique et au moins une cellule électrochimique (6) disposée dans le boîtier (1) ainsi que deux pôles de raccordement (4, 5) électriques destinés à établir le contact électrique avec l'accumulateur (1), **caractérisé en ce qu'**au moins l'un des pôles de raccordement (4, 5) est configuré en symétrie de rotation par au moins deux portions (10, 11) constituées de métaux ou d'alliages métalliques différents et ces portions (10, 11) sont reliées l'une à l'autre,
les au moins deux pôles de raccordement (4, 5) électriques étant disposés sur une première paroi de boîtier (3) du boîtier (2), les au moins deux portions (10, 11) possédant une portion supérieure (11) et une portion inférieure (10) disposée au-dessous de celle-ci, la portion inférieure (10) étant reliée mécaniquement et électriquement à une borne électrique (7) positive ou négative de la cellule électrochimique (6) et la portion supérieure (11) n'étant reliée qu'indirectement à la borne (7) de la cellule électrochimique (6) par le biais de la portion inférieure (10),
un plan de séparation (12) étant disposé entre la portion supérieure (11) et la portion inférieure (10), lequel s'étend parallèlement à la première paroi de boîtier (3),
l'au moins un pôle de raccordement (4, 5) faisant saillie à travers la première paroi de boîtier (3) de l'accumulateur (1) et la le point de liaison des au moins deux portions (10, 11) reliées l'une à l'autre constituées de métaux ou d'alliages métalliques différents se trouvant à l'intérieur du boîtier (2) ou au moins à l'intérieur d'une zone rendue étanche par rapport à l'environnement extérieur du boîtier.

10. Procédé selon la revendication 9,
**caractérisé en ce que**
les au moins deux portions (10, 11) constituées de métaux ou d'alliages métalliques différents sont reliées l'une à l'autre par un procédé de soudage par friction.
